# EUROPEAN PATENT APPLICATION

(11) **EP 3 118 786 A1**
(43) Date of publication of application: **18.01.2017**
(21) Application number: 16460043.9
(22) Date of filing: 11.07.2016
(51) Int. Cl.: G06Q 10/08

(54) **SYSTEM FOR IDENTIFICATION AND LOCATION OF GOODS IN A DISTRIBUTION CENTRE**

(30) Priority: 13.07.2015 PL 41310815
(71) Applicant: Promabis Sp. z o.o., 03-910 Warszawa (PL); Mega Sonic SA, 50-130 Wroclaw (PL)
(72) Inventor: Andrukiewicz, Elzbieta Stanislawa, 04-314 Warszawa (PL); Dlugolecki, Marcin, 01-365 Warszawa (PL)
(74) Representative: Bieniak, Wieslaw

(57) **Abstract**

The disclosed system enables automated locating and tracking of packaging labelled with RFID tags in a distribution centre. The system based on radio frequency identification is characterised in that it has a grid of reference RFID tags (**1**), placed on fixed elements of the warehouse, such as racks, and an Unmanned Aerial Vehicle - Drone (**3**) and a Drone control station (**4**). The Drone is equipped with an RFID antenna/reader system (**5**), a set of sensors (**6,7,8**) and a local software module, communicating, via a bidirectional radio frequency channel, with a Drone control module, placed in the control station. Using data from the reference readout of the RFID tags, the system adjusts the direction and height of the Drone's flight.

## Description

The invention relates to a system for identification and location of goods in a distribution centre.

A distribution centre (warehouse) consists of a building together with its infrastructure and organisation, in which processes of acquisition, storage, completion of goods for shipping and delivery, and other supportive processes are performed. Modern distribution centres occupy areas of from 10,000 to 30,000 m² and usually operate with multiple shifts. They are able to accept and process up to 4,000 palettes daily and have a dozen or several dozen loading gates for heavy goods vehicles, via which the goods enter the centre and then leave it. Depending on:
➢ nature of the goods stored,
➢ rotation (i.e. required rate of exchange of goods in the warehouse),
➢ fragmentation level of the shipments,
the warehouses may vary in equipment, such as rack types, their arrangement in the centre's space and methods of transportation of goods (e.g. forklifts or belt conveyors).

The most common warehouse type is a high bay warehouse. Such warehouses are characterised by multi-storey racks reaching even 6 layers, arranged in parallel and separated with alleys, in which storekeepers (warehouse operators) travel on foot or by using forklifts. The processes in a logistics centre are typically performed using a Warehouse Management System (WMS). The input data concerning identified loads (usually packaging of goods) and distribution directions are entered into the systems vie automatic (wholly or partially) identification techniques. The oldest method for goods labelling, enabling automated identification in the supply chain, consists in one-dimensional bar codes (also called 1D codes). As the automated identification techniques are being developed, two-dimensional (2D) codes are increasingly becoming widely used, which contain much more information than 1D codes. At present, Radio Frequency Identification (RFID) techniques are widely being introduced into logistics.

A RFID label, also called a RFID tag or transponder, is a simple transceiver system, where writing and reading of data in the memory of a microprocessor installed in the transponder is enabled through an established bidirectional connection between a RFID reader and a transponder. Passive RFID labels are of particular importance as the read and write operations in the microprocessor's memory are performed using portions of energy sent in a modulated signal emitted by the RFID reader (the labels themselves contain no power source). Thanks to their simple structure and easy manufacturing technology, passive RFID labels are inexpensive and are increasingly replacing labels based on bar codes. RFID labels operating in the UHF band (namely the 865-868 MHz band in Europe) have found the widest use in logistics. Parameters of the radio interface, methods for modulation of the signal and data coding, the memory partitioning and operating modes of the processor installed in the RFID tag, as well as the RFID reader operating modes, are subject to international standardisation, enabling cooperation of the RFID infrastructure produced by various manufacturers.

When compared to bar codes, RFID labels have a series of functional advantages:
➢ Possibility to read and write in the memory of an RFID label
➢ Reading and writing of the RFID label's memory irrespective of lighting conditions
➢ Simultaneous reading of multiple tags; writing in the memory of a selected tag
➢ Authorised access to the RFID label's memory
➢ Access to selected banks of the RFID label's memory
➢ Possibility to write information at any stage of life cycle of the RFID label
➢ Possibility to block writing or reading, depending on the application
➢ High resistance to harmful external conditions (dust, temperature, water, shock, vibrations, UV radiation, aggressive chemical environment).
➢ Higher resistance to mechanical damage (abrasion)
➢ Possibility to read information from many objects simultaneously
➢ Low level of data transmission errors.
➢ Possibility to write much more information than in 1D and 2D codes.

The performance of all warehouse processes is based on correct and actual identification of goods and their movement when entering the warehouse, within the warehouse and when leaving the warehouse. At present, a majority of the operations connected with identification of goods and their location is carried out by the portable readers, bar code or RFID, respectively, used by warehouse operators. Such a method for performing the processes constitutes a source of human error, caused by technological limitations resulting from the limited reading or writing range of the devices used. In order to enable the operator to read a label placed on a palette, located on higher levels of the rack, particularly in the case of bar codes, the corresponding label is duplicated and placed on the pole of a rack within the sight of the operator. This means the operator can collect a palette or place it on a high rack level, while scanning or entering an incorrect label into the system - one of many that are close to each other on the pole. This is the moment in the process when incorrect location scanning errors occur most often.

Apart from an incorrect location error, the most important problems of
the effectiveness of warehouse processes include:
➢ The complicated mechanism of operation of the portable device, requiring it to be removed from its packaging, switched on, used for scanning and placed back into the packaging
➢ The complicated set of the operator actions together with the need to interrupt transporting tasks in order to scan codes
➢ Wasting of time in searching for the right goods resulting from uncontrolled movement of goods without documenting such an operation properly in the warehouse management system.

It is estimated the operator's work efficiency is decreased by approx. 30% due to the inadequacies of the applied identification techniques and errors in performing the processes, leading to an uncertainty of the location of goods in the warehouse.

The possibility to utilise RFID technology not only for tagging products, but also for fully automated location of goods and tracking their movements, may constitute a significant addition to the existing identification systems and warehouse management systems Application of a RFID infrastructure in a distribution centre requires the following conditions to be taken under consideration:
➢ Application of location algorithms using the rule of triangulation, which are commonly used in open air space, is impossible in the closed space of a warehouse due to the propagation properties of electromagnetic waves
➢ Application of algorithms for compensation of errors which result from propagation conditions, i.e. distortion, suppression and reflection of electromagnetic waves, increases the infrastructure complexity and its costs needed for achieving a desired precision of location.

Systems that enable locating and tracking objects inside buildings, analogous to the GPS system operating in open space, have rather exhaustive literature. Many different location systems based on various statistical methods have been proposed.

A locating method utilising RFID technology is one of the most promising research area. While using statistical methods for the noise suppression and minimising the measurement errors, installations consisting of antennas and readers allow for achieving a high precision of the object location. However, the majority of the proposed solutions are based on a static, fixed antenna grids that detect objects labelled with RFID tags. Considering the limited range of a single antenna, this is an inconvenient and expensive solution when used in large-size buildings, such as distribution centres.

The aim of the invention is to develop a system enabling automated locating and tracking of goods labelled with RFID tags in a distribution centre.

The system for identification and location of goods in a distribution centre, according to the invention, based on radio frequency identification, comprising of RFID labels placed on the packaging of goods, is characterised in that it has a network of reference RFID tags, placed on fixed items (elements?) of the warehouse, such as racks, and an Unmanned Aerial Vehicle - Drone and a Drone control station, while the Drone is being equipped with a RFID antenna/reader system, a set of sensors and a local software module, communicating, via a bidirectional radio frequency channel, with a Drone control module, placed in the control station.

In a preferred embodiment, the sensor assembly comprises a barometer, a gyroscope and a compass.

In the solution being disclosed, two innovative technologies were used:
UAV, or Unmanned Aerial Vehicle, and RFID, or identification of objects utilising radio frequency technology, combined in a manner not used previously, to control the trajectory and location and tracking of packaging with RFID labels attached, in the closed space of a distribution centre.

By utilising RFID technology as tags for the Drone's flight trajectory, a significantly larger area of the device's operation may be covered using a lower number of tags.

The required RFID infrastructure may be simplified, including a reduction in the number of antennas and the number of readers to single ones, resulting in:
➢ a reduction of the solution's costs by three orders of magnitude
➢ a reduction of energy consumption to a comparable degree (as above)
➢ a reduction of the electromagnetic radiation level
➢ a significant reduction of the time needed for implementation of the solution, including installation, tuning, testing and deploying of the RFID infrastructure.

The novelty of the proposed algorithm consists in the introduction of an adaptive control system for the Drone's flight, utilising information on the power of the signal reflected from tags fixed to the racks, collected dynamically during flight, and correcting the flight parameters on this basis, enabling instant location of the Drone within the warehouse space. The proposed solution encompasses installing the RFID tags on warehouse racks, thus in a plane parallel to the Drone's flight. This results in a reduction of the number of RFID tags used for location purposes, being indispensable for the functioning of the proposed solution.

After equipping the system with the proper application software, automatic stock inventory of goods in the warehouse and identification of RFID tags on the packaging of goods may be carried out.

The system provides a vast reduction in the cost of equipping a distribution centre, as well as in the cost of the processes performed in the centre.

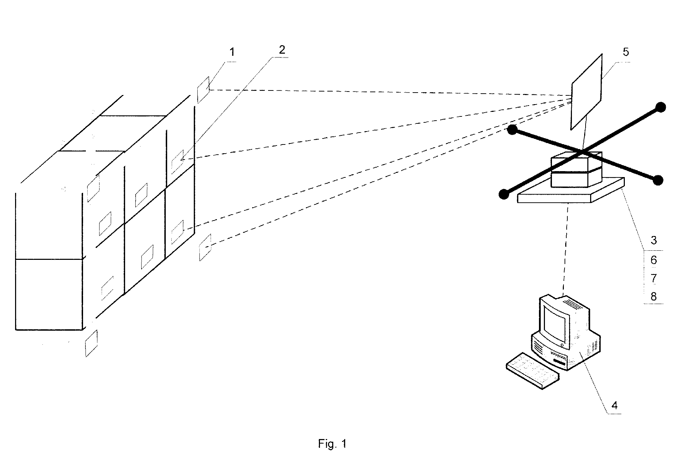

The system for identification and location of goods in a distribution centre according to the invention is shown in the embodiment of the drawing, in which Fig. 1 illustrates the structure of the system.

The system for identification and location of goods in a distribution centre consists of the following elements:
- a grid of reference RFID tags **1**, placed on the shelves of the warehouse racks (they may be placed on other static elements constituting the warehouse's equipment),
- a network of RFID labels **2**, placed on the packaging of goods. Proper encoding of memory content of the reference tags **1** enables their distinguishing from the labels **2**.
- an unmanned aerial vehicle - Drone **3**,
- a control station **4**.

The Drone **3** is equipped with an RFID antenna/reader system **5**, with a software module collecting information on the level of reflected power for the identified reference tags, and transmitting the information, via a bidirectional radio frequency channel, to a Drone remote control module, placed in the control station **4**.

The Drone **3** has a set of additional sensors (not shown in the Figure), including a barometer **6**, a gyroscope **7** and a compass **8**, gathering information on the height and direction of flight, with software modules processing the information and transmitting it, via a bidirectional radio frequency channel, to the Drone remote control module, placed in the control station **4**.

The control station **4** with a software module for remote control of the Drone **3**, with a bidirectional communication module with the communication module of a local control unit, processes input data and determines the need for correction based on predefined internal rules. The information is transmitted back to the autopilot module of the Drone.

The RFID antenna/reader system **5**, installed in the Drone **3**, reads out the Received Signal Strength Indication (RSSI) from all reference tags, located in the readout range. It will record a series of readouts from the same reference tag while the Drone travels along the rack, obtaining the characteristics of the dependence of reflected RSSI from the tag in a function of the distance to this tag.

The RFID antenna is installed in a plane parallel to the plane determined by the reference tags installed on the rack, so as to obtain optimum conditions for propagation of radio waves between the reader's antenna and the reference tag's antenna.

The information on the RSSI of the signal received by the reader and known locations of the reference tags in a 3D space are used as input data for the software module determining the current position of the Drone and determining adjustments to the direction and height of the Drone's flight based on current and historical data. As the readout from the tags carried out during the Drone's flight is continuous, the correction of flight parameters has an adaptive character.

The information on location of an element of equipment is stored in the microprocessor memory of the RFID tag in such a way that it precisely indicates its location on the warehouse plan, as well as additional features, such as the bottom and the top shelf in the rack, the first or the last rack in the alley, other types of fixed elements (e.g. partition walls, doors).

The arrangement of the reference RFID tags in the warehouse is predefined, and the data on the individual reference RFID tag position are entered into the system at the installation stage. Additionally, all changes in locations of the reference RFID tags are recorded in the system.

For control of the Drone's movement in a 3D space, the system collects the following data from the components installed in the Drone:
- characteristics of the dependence of RSSI, i.e. Received Signal Strength Indication of the signal received by the RFID antenna from a reference RFID tag, placed in a known spot of the warehouse, generated dynamically based on a current and historical readout of the signal strength,
information collected from other sensors, serving the purpose of keeping a stable position in space and the direction of flight.

The above information is transmitted to the remote control module of the system, which determines adjustment to the direction and height of the Drone's flight, by sending proper commands to the Drone's autopilot module.

Together with the readouts of the reference tags, readouts from RFID tags installed on the packaging of goods placed on a rack's shelf are also recorded in the system. In combination with this information on the Drone's location with respect to the reference tags, the system is able to locate the identified goods packaging with accuracy of defined area on the shelf on which the packaging was placed.

## Claims

1. System for identification and location of goods in a distribution centre, based on radio frequency identification, reading RFID labels placed on the packaging of goods, **characterised in that** the system has a grid of reference tags (**1**), placed on fixed elements of the centre, such as racks, and an Unmanned Aerial Vehicle - Drone (**3**) and a Drone control station (**4**), the Drone being equipped with an RFID antenna/reader system (**5**), a set of sensors (**6**,**7**,**8**) and a software module, communicating, via a bidirectional radio frequency channel, with a Drone control module, placed in the control station.

2. A system according to claim 1, **characterised in that** the set of sensors comprises a barometer (**6**).

3. A system according to claim 1, **characterised in that** the set of sensors assembly comprises a gyroscope (**7**).

4. A system according to claim 1, **characterised in that** the set of sensors comprises a compass (**8**).
